# EUROPÄISCHE PATENTSCHRIFT

(11) **EP 0 629 426 B1**
(45) Veröffentlichungstag und Bekanntmachung des Hinweises auf die Patenterteilung: **26.11.1997**
(21) Anmeldenummer: 94810283.5
(22) Anmeldetag: 11.05.1994
(51) Int. Cl.: B01D 29/41, B01D 29/68, B01D 29/72, B01D 46/10

(54) **Filtervorrichtung**
Filter device
Appareil de filtration

(30) Priorität: 26.05.1993 CH 1601/93
(43) Veröffentlichungstag der Anmeldung: 21.12.1994
(73) Patentinhaber: Holl, Jürgen, 73773 Aichwald/Aichelberg (DE)
(72) Erfinder: Kiefel, Martin, 73614 Schorndorf (DE)
(74) Vertreter: Quehl, Horst Max, Dipl.-Ing.

(56) Entgegenhaltungen:
- EP-A- 0 479 077
- EP-A- 0 531 762
- WO-A-90/08587
- JP-A-60 110 315
- NL-A- 8 103 750
- US-A- 4 222 754

## Beschreibung

Die Erfindung betrifft eine Filtervorrichtung mit den Merkmalen des Oberbegriffs des Anspruchs 1.

Eine Filtervorrichtung der genannten Art ist bekannt durch die JP-A-60.110.315.Die Absaugdüsen dieser bekannten Vorrichtung haben einen Oeffnungsquerschnitt, der sich zur Erzielung einer ausreichenden Saugwirkung nur über einen geringen Teil der Filterscheibe erstreckt. Um die gesamte Oberfläche der Filterscheibe periodisch von Feststoffpartikeln zu reinigen, ist es folglich erforderlich, die Absaugdüse mittels einer Antriebseinrichtung radial über die sich während der Reinigung drehende Filterscheibe zu bewegen. Ausserdem benötigt diese Vorrichtung für die zahlreichen, parallel zueinander angeordneten Filterflächen eine entsprechend grosse Anzahl von Absaugdüsen.

Der Erfindung liegt die Aufgabe zugrunde, eine Filtervorrichtung der genannten Art zu finden, die im Verhältnis zu ihrer Grösse eine grosse Filterfläche aufweist und durch eine einfach aufgebaute Mechanik eine periodische Reinigung der Filterfläche mit guter Reinigungswirkung ermöglicht. Die Lösung der genannten Aufgabe erfolgt erfindungsgemäss aufgrund der Merkmale des kennzeichnenden Teils des Anspruchs 1.

Vorteilhafte Ausführungsformen der Vorrichtung sind Gegenstand der abhängigen Patentansprüche und der folgenden Beschreibung anhand der Zeichnungen zu entnehmen. Es zeigt:
- Fig.1: eine Ansicht einer Ausführungsform einer erfindungsgemässen Vorrichtung in Richtung auf die Zuströmseite,
- Fig.2: einen unvollständigen Axialschnitt und eine teilweise Seitenansicht auf den Innenaufbau der Vorrichtung nach Fig.1,
- Fig.3: eine Seitenansicht der Vorrichtung nach Fig. 1 und 2,

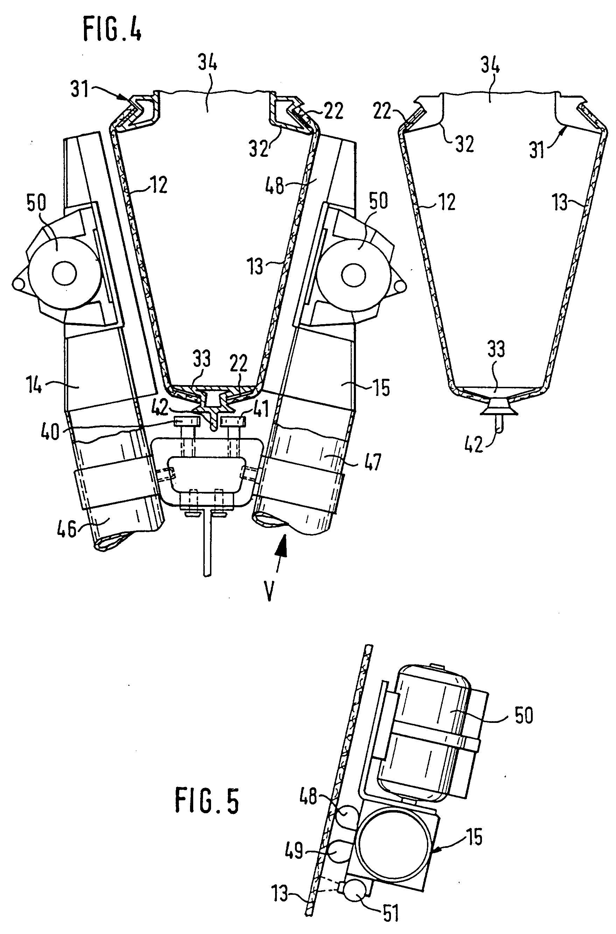

- Fig.4: einen Teilquerschnitt durch die Filterkammer nach Fig.1 bis 3 im Bereich der beiden Absaugdüsen,
- Fig.5: eine Ansicht einer der Absaugdüsen in Richtung des Pfeiles der Fig.4,
- Fig.6: eine Darstellung des Düsenträgers der Vorrichtung nach Fig.1 bis 3 mit seiner Stangenführung,
- Fig.7: eine Seitenansicht der Anordnung nach Fig.6 und
- Fig.8: einen Querschnitt durch einen Teil der Abströmkammer im Bereich ihres Antriebes und ihrer Abdichtung.

Die dargestellte Filtervorrichtung hat ein ihre äussere Umgrenzung bildendes Gehäuse 1, mit einem Einlass 2 für das zu reinigende Gas, beispielsweise für Luft einer Klimaanlage, auf einer Gehäuseseite und mit einem Auslass 3 an der gegenüberliegenden Gehäuseseite. Das Gehäuse 1 bildet beispielsweise ein vergrössertes Kanalstück eines nicht dargestellten Strömungskanals. Die Querschnittsform des Gehäuses 1 ist vorzugsweise quadratisch, so dass die Filtervorrichtung raumsparend angeordnet werden kann.

In dem Gehäuse 1 ist eine zuströmseitig durch eine Wand 4 geschlossene zylindrische Abströmkammer 5 drehbar gelagert, an deren Umfang schraubenlinienförmig eine Filterkammer 34 befestigt ist. Das zu reinigende Gas strömt somit von aussen über die Filterkammer 34 radial in die Abströmkammer 5 ein, um diese in axialer Richtung über die abströmseitige Kammeröffnung 10 von Feststoffpartikeln gereinigt zu verlassen. Hierzu hat die Wand der Abströmkammer 5 im Bereich der Filterkammer 34 mehrere in Umfangsrichtung gleichmässig verteilte Oeffnungen 11'.

Da die Filterkammer beidseitig je eine Filterscheibe 12,13 hat und sich schraubenlinienförmig in axiale Richtung erstreckt, hat die Filtervorrichtung im Verhältnis zu ihren Aussenabmessungen eine grosse gesamte Filterfläche. Die radial gemessene Breite der beidseitigen kreisringförmigen Filterscheiben 12,13 ist durch die Länge der an ihnen angeordneten, länglichen Absaugdüsen 14,15 bestimmt. Der Durchmesser der Filterscheiben 12,13 ergibt sich aufgrund des für die Abströmkammer 5 erwünschten Strömungsquerschnittes für das zum Auslass 10 strömende, gereinigte Medium. Dieser Strömungsquerschnitt wird vorzugsweise der Querschnittsgrösse der Strömungswege auf der Zuströmseite zu den Filterscheiben angepasst, so dass sich keine wesentlichen Aenderungen der Strömungsgeschwindigkeiten zwischen Ein- und Auslass der Filtervorrichtung ergeben. Entsprechend wird auch der Abstand zwischen der radial äusseren Begrenzung der Filterkammer 34 und der Wand des Gehäuses 1 gewählt. Dieser Abstand kann bei quadratischer Querschnittsform des Gehäuses 1 entsprechend der dargestellten Ausführungsform besonders gering sein, da in den vier Eckbereichen 17 des Gehäuses grosse Querschnitte für die Zuströmung zu den Filterscheiben 12,13 der Filterkammer 34 vorhanden sind.

Um die Filterscheiben 12,13 der Filterkammer 34 nach Ansammlung einer bestimmten Menge an ausgefilterten Feststoffpartikeln zu reinigen, die zu einem wesentlichen Druckabfall bei der Durchströmung der Filtervorrichtung führt, werden diese dann an beidseitig zur Filterkammer 34 angeordnete Absaugdüsen 14,15 drehend entlang bewegt. Hierfür ist die Abströmkammer 5 an ihren beiden Enden durch Lager 18,19 drehbar gelagert und mit einem Antrieb verbunden, der beispielsweise aus einem Elektromotor 20 und einer Keilriemen-Antriebsübertragung 21 besteht. Die Lager 18,19 sind an in dem Gehäuse befestigten Rahmen 29 befestigt. Die Achse 30 der Abströmkammer 5 ist zuströmseitig an der Kammerwand 4 und abströmseitig an Speichen 35 der Abströmkammer 5 befestigt.

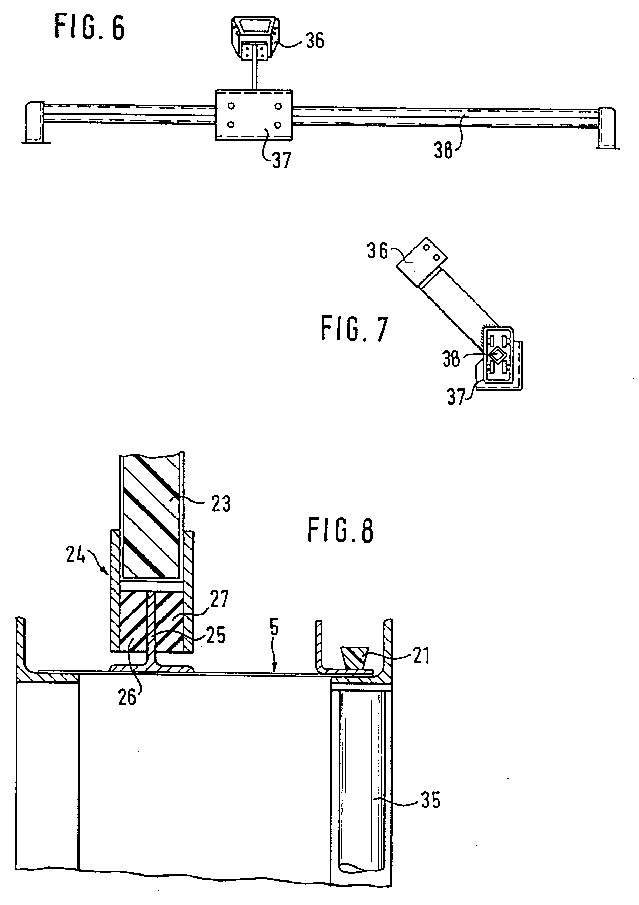

Die Abdichtung zwischen der drehbaren Abströmkammer 5 und einer abströmseitigen, am Gehäuse 1 befestigten Abschlusswand 23 erfolgt durch eine Dichtungsanordnung 24 entsprechend der DarStellung in Fig. 8. Diese hat eine die Abströmkammer 5 umschliessende und mit dieser sich drehende Dichtrippe 25, die beidseitig von je einem an der Abschlusswand 23 befestigten Dichtring 26,27 umschlossen ist. Der zwischen Zuströmseite und Abströmseite der Filtervorrichtung vorhandene Differenzdruck des zu filternden Mediums drückt die achsialverschiebbar gelagerte Abströmkammer 5 mit ihrer Dichtrippe 25 gegen den abströmseitigen Dichtring 27.

Die aus textilen Filtermatten hergestellten Filterscheiben 12, 13 sind aus mehreren ringsektorförmig ausgeschnittenen Scheibenelementen zusammengesetzt und an einem Trägerrahmen 31 zur Bildung der Filterkammer 34 lösbar befestigt, wobei sich jedes Scheibenelement beispielsweise um einen Bogenwinkel von 90^{o} erstreckt. Ihre Befestigung an dem Trägerrahmen 31 kann mittels Klettverschlüssen 22 erfolgen, die streifenförmig an einer schräg nach aussen gerichteten Fläche der naben- und felgenartigen Rahmenelemente 32,33 vorgesehen sind.

Damit die schraubenlinienförmige Filterkammer 34 sich bei Drehung der Abströmkammer 5 zwischen den beiden Absaugdüsen 14,15 hindurchbewegen kann, sind diese an einem gemeinsamen Düsenträger 36 befestigt, der mittels eines Laufwagens 37 an einer Führungsstange 38 verschiebbar geführt ist (Fig.6 und 7). Die Führung an der schraubenlinienförmigen Filterkammer 34 erfolgt durch zwei an dem Düsenträger 36 gelagerte Laufrollen 40,41, die eine Führungsrippe 42 mit ausreichendem Abstand zwischen sich einschliessen, um die Abweichungen der Form der Führungsrippe 42 von einer geometrisch exakten Schraubenlinie zu berücksichtigen.

Zum Reinigen der Filterscheiben 12,13 wird die sonst stillstehende Filterkammer 34 so lange durch den Riemenantrieb 20,21 in einer Richtung drehend angetrieben, bis der durch die Führungsrippe 42 mitgeführte Laufwagen 37 an einem im Bereich der Führungsstange 38 angeordneten Endschalter anläuft. Dieser Endschalter bewirkt eine Umsteuerung der Drehrichtung des Riemenantriebs 20,21 sowie die Umsteuerung eines von einem Schiebeantrieb 44 betätigten Sperrschiebers 45. Dieser gibt jeweils nur die Saugleitung 46,47 von einer der beidseitig der Filterkammer 34 angeordneten Absaugdüsen 14,15 frei, an die sich eine der Filterscheiben 12,13 aufgrund der Dreh- und Förderbewegung ihrer Schraubenlinie anlegt. Da somit in Abhängigkeit von der Drehbewegung nur jeweils eine Absaugdüse 14,15 des Düsenpaares wirksam wird, ergibt sich an dem flexiblen, textilen Filtermaterial eine intensive Reinigungswirkung. Dabei wölbt sich das Filtermaterial durch den Saugstrom leicht zwischen den radialgerichteten Begrenzungslippen 48,49 der jeweiligen Absaugdüse 14,15 aus. Zusätzlich wird die Ablösung der Verunreinigungen von der Filterscheibe durch einen an den Absaugdüsen 14,15 befestigten Rüttelmotor 50 erleichtert, so dass die Begrenzungslippen 48,49 der Absaugdüsen 14,15 vibrierend auf das Filtermaterial einwirken.

Die Saugleitungen 46, 47 der Absaugdüsen 14,15 sind hinter dem Sperrschieber 45 an einer nach aussen führenden Sammelleitung 53 angeschlossen, an deren Ende ein handelsüblicher Staubsauger 54 ankuppelbar ist. Da die Reinigung der Filterscheiben nur nach bestimmten Zeitabständen erforderlich ist, kann der Staubsauger in den Zwischenzeiten von der Filtervorrichtung abgekoppelt werden. In diesen Zwischenzeiten während des normalen Filterbetriebs der Filtervorrichtung sind beide Saugleitungen 46, 47 durch den Sperrschieber 45 geschlossen.

Für eine Desinfektion des Filtermaterials nach dem Absaugen der Verunreinigungen ist an der die Absaugdüse 14,15 und den Rüttelmotor 50 tragenden Einheit eine Spritzdüse 51 vorgesehen, die sich schlitzförmig ebenfalls über die radiale Breite der Filterscheiben 12,13 erstreckt.

Die sich radial nach aussen verjüngende Querschnittsform der Filterkammer 34 hat mehrere Vorteile. Sie ermöglicht es, trotz des Eingriffes der Absaugdüsen 14,15 die schraubenlinienförmige Filterkammer 34 mit geringerer Steigung zu formen, so dass in einer Filtervorrichtung bestimmter axialer Länge eine grössere Filterfläche für die Reinigung des Mediums zur Verfügung steht.

Durch die schräge Anordnung der Filterscheiben 12,13 erhalten diese bei gleichem Durchmesser eine etwas grössere Breite und es wird eine geringere Umlenkung des Gasstromes bei ihrer Durchströmung erzielt.

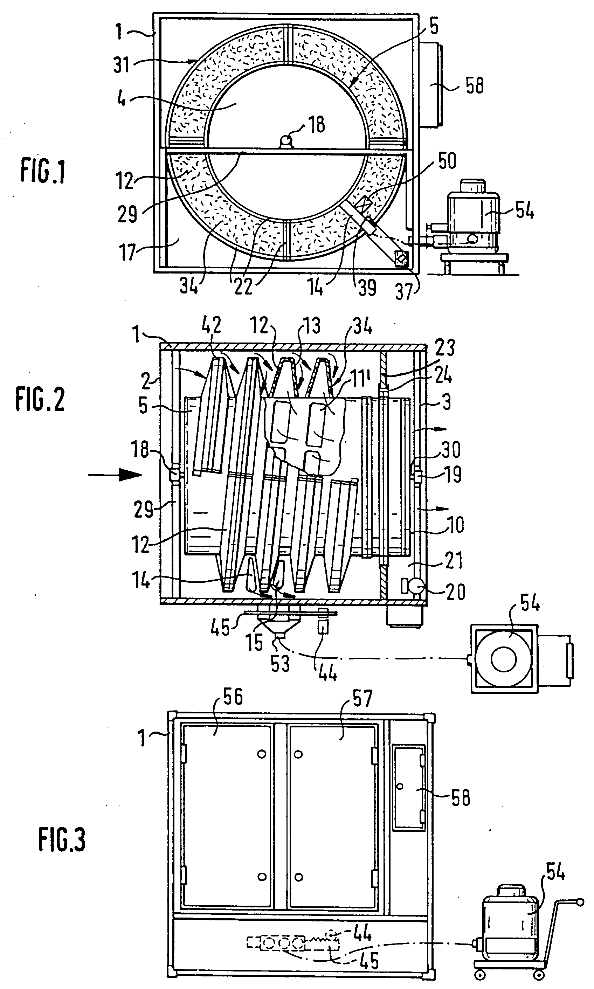

Die Ansicht der Aussenseite des Gehäuses 1 der Filtervorrichtungen nach Fig.3 zeigt seitlich am Gehäuse 1 vorgesehene, verhältnismässig grosse Türen 56,57, die zur Kontrolle über den Zustand der Filterflächen und zum leichten Auswechseln schadhafter Scheibenelemente der Filterscheiben 12,13 geöffnet werden können. Eine weitere kleine Tür 58 gestattet den Zugang zu den elektrischen Elementen der Filtervorrichtung.

## Patentansprüche

1. Filtervorrichtung zum Entfernen von Feststoffpartikeln aus einem Gas, mit einem Ein- und Auslass (2,3) aufweisenden Gehäuse (1), in dem Filterscheiben (12,13) angeordnet sind, von denen zwei die seitliche Begrenzung von einer Filterkammer (34) bilden, die mit eine drehbar gelagerten, mit einem Drehantrieb (20, 21) verbundenen hohlzylindrischen Abströmkammer (5) diese umschliessend verbunden ist, wobei an beiden Seiten der Filterkammer (34) je eine Absaugdüse (14,15) einer Absaugeinrichtung zum Entfernen von Feststoffpartikeln von den Filterscheiben (14,15) angeordnet ist, dadurch gekennzeichnet, dass die Filterkammer (34) schraubenlinienförmig die Abströmkammer (5) umschliesst, die Absaugdüsen (14,15) der Absaugeinrichtung sich über die radiale Breite der Filterscheibe (12,13) erstrecken und ein Düsenträger (36) parallel zur Drehachse der Abströmkammer (5) verschiebbar geführt ist.

2. Filtervorrichtung nach Anspruch 1, dadurch gekennzeichnet, dass die zuströmseitig geschlossene und abströmseitig offene Anströmkammer (5) in Richtung der Schraubenlinie gleichmässig verteilte Verbindungsöffnungen (11') zu der Filterkammer (34) aufweist.

3. Filtervorrichtung nach Anspruch 2, dadurch gekennzeichnet, dass die Filterkammer (34) einen sich radial nach aussen verjüngenden Querschnitt hat.

4. Filtervorrichtung nach einem der Ansprüche 1 bis 3, dadurch gekennzeichnet, dass das Gehäuse (1) der Vorrichtung die Filterkammer (34) mit Abstand umschliesst, wobei eine abströmseitige Querwand (23) des Gehäuses (1) die drehbare Abströmkammer (5) dichtend umschliesst.

5. Filtervorrichtung nach einem der Ansprüche 1 bis 4, dadurch gekennzeichnet, dass die Filterscheiben (12,13) mehrere in Umfangsrichtung miteinander verbundene Scheibenelemente haben, so dass diese die Form von Ringsektoren aufweisen, wobei die Scheibenelemente entlang ihrer Ränder an naben- und felgenartigen Rahmenteilen (32,33) eines Trägerrahmens (31) der mindestens einen Filterkammer (34) lösbar befestigt sind.

6. Filtervorrichtung nach Anspruch 5, dadurch gekennzeichnet, dass die Scheibenelemente mittels Klettverschlüssen (22) an den Rahmenteilen (32,33) befestigt sind.

7. Filtervorrichtung nach einem der Ansprüche 1 bis 6, dadurch gekennzeichnet, dass zwei Absaugdüsen (14,15) an einem gemeinsamen Düsenträger (36) befestigt sind, der sowohl an der schraubenlinienförmigen Filterkammer (34) als auch an einer zur Drehachse der Abströmkammer (5) parallelen Führungsfläche (38) geführt ist.

8. Filtervorrichtung nach einem der Ansprüche 1 bis 7, dadurch gekennzeichnet, dass an jeder Absaugdüse (14,15) eine Rütteleinrichtung (50) vorgesehen ist.

9. Filtervorrichtung nach einem der Ansprüche 1 bis 8, dadurch gekennzeichnet, das an jeder Absaugdüse (14,15) eine Düse (51) für die Zuführung einer Flüssigkeit zur Filterfläche vorgesehen ist.

10. Filtervorrichtung nach einem der Ansprüche 2 bis 12, dadurch gekennzeichnet, dass die Saugleitungen (46,47) eines Paares von Absaugdüsen (14,15) wechselweise schliessbar sind, so dass der Saugstrom jeweils nur auf eine Saugdüse (14,15) des Paares geleitet ist.

## Claims

1. Filter device for removing solid particles from a gas, with a casing (1) having an inlet and an outlet (2,3) and in which are located filter disks (12,13), two of them form the lateral boundary of a filter chamber (34), which is connected to and surrounds a hollow cylindrical outflow chamber (5) mounted in rotary manner and connected to a rotary drive (20,21), whereby on both sides of the filter chamber (34) is provided one suction nozzle (14,15) of a suction device for removing solid particles from the filter disks (12,13), characterized in that the filter chamber (34) in a helical manner surrounds the outflow chamber (5), the suction nozzles (14,15) of the suction device extends over the radial width of the filter disks (12,13) and a nozzle carrier (36) is guided parallel to the rotation axis of the outflow chamber (5).

2. Filter device according to claim 1, characterized in that outflow chamber (5), which is closed on the inflow side and open on the outflow side has evenly distributed connecting openings (11') to the filter chamber (34).

3. Filter device according to claim 2, characterized in that the filter chamber (34) has a radially outwardly tapering cross-section.

4. Filter device according to one of the claims 1 to 3, characterized in that the casing (1) of the device spacedly surrounds the filter chamber (34), an outflow-side partition (34) of the casing (1) surrounding in sealing manner the rotary outflow chamber (5).

5. Filter device according to one of the claims 1 to 4, characterized in that the filter disks (12,13) have several circumferentially interconnected disk elements, so that they have the shape of ring sectors, the disk elements being detachably fixed along their edges to hub or rim-like frame parts (32,33) of a support frame (31) of the filter chamber (34).

6. Filter device according to claim 5, characterized in that the disk elements are fixed to the frame parts by means of Velcro strip fasteners (22).

7. Filter device according to one of the claims 1 to 6, characterized in that two suction nozzles (14,15) are fixed to a common nozzle carrier (36), which is guided both on the helical filter chamber (34) and on a guide surface (38) parallel to the rotation axis of the outflow chamber (5).

8. Filter device according to one of the claims 1 to 7, characterized in that a vibrating device (50) is provided on each suction nozzle (14,15).

9. Filter device according to one of the claims 1 to 8, characterized in that a nozzle (51) for supplying a liquid to the filter surface is provided on each suction nozzle (14,15).

10. Filter device according to one of the claims 1 to 9, characterized in that the suction lines (46,47) of a pair of suction nozzles (14,15) are alternately closable, so that the suction flow is in each case only directed onto one suction nozzle (14,15) of the pair.

## Revendications

1. Appareil de filtration pour éliminer les particules solides d'un gaz, avec un boîtier (1) présentant une admission et une sortie (2,3), dans lesquelles sont disposés des éléments filtrants (12, 13), dont deux constituent la délimitation latérale d'une chambre de filtration (34) laquelle est reliée à une chambre d'évacuation (5) en forme de cylindre creux montée à rotation et reliée à une commande rotative (20, 21) et entoure cette chambre d'évacuation, où de chacun des deux côtés de la chambre de filtration est disposée une buse d'aspiration (14, 15) pour éliminer les particules solides des éléments filtrants (12,13) caractérisé en ce que la chambre de filtration (24) entoure en hélice la chambre d'évacuation (5), en ce que les buses d'aspiration (14, 15) du dispositif d'aspiration s'étendent sur la largeur radiale de l'élément filtrant (12, 13) et en ce qu'un porte-buses (36) est guidé à glissement parallèlement à l'axe de rotation de la chambre d'évacuation (5).

2. Appareil de filtration suivant la revendication 1, caractérisé en ce que la chambre d'évacuation (5) fermée côté admission et ouverte côté évacuation présente en direction de l'hélice des orifices de communication (11') uniformément distribués avec la chambre de filtration (34).

3. Appareil de filtration suivant la revendication 2, caractérisé en ce que la chambre de filtration (34) a une section transversale qui diminue radialement vers l'extérieur.

4. Appareil de filtration suivant l'une quelconque des revendications de 1 à 3, caractérisé en ce que le boitier (1) de l'appareil entoure à distance la chambre de filtration (34), et en ce qu'une paroi transversale (23) côté évacuation du boitier (1) entoure de manière hermétique la chambre d'évacuation rotative (5).

5. Appareil de filtration suivant l'une quelconque des revendications de 1 à 4, caractérisé en ce que les éléments filtrants (12, 13) présentent des en direction périphérique plusieurs disques mutuellement reliés, de telle sorte que ces derniers présentent la forme de secteurs de cercle, les disques étant le long de leurs bords fixés de manière amovible à des éléments de châssis en forme de moyeu et de jante (32, 33) d'un cadre de support (31) de la chambre de filtration (34).

6. Appareil de filtration suivant la revendication 5, caractérisé en ce que les disques sont fixés aux éléments de châssis (32, 33) au moyen de liaisons à hérisson (22).

7. Appareil de filtration suivant l'une quelconque des revendications de 1 à 6, caractérisé en ce que deux buses d'aspiration (14, 15) sont fixées à un porte-buses (16) commun, lequel est guidé tant le long de la chambre de filtration de forme hélicoïdale (34) qu'également le long d'une surface de guidage (38) perpendiculaire à l'axe de rotation de la chambre d'évacuation (5).

8. Appareil de filtration suivant l'une quelconque des revendications de 1 à 7, caractérisé en ce que sur chaque buse d'aspiration (14, 15) est prévu un dispositif vibrateur (50).

9. Appareil de filtration suivant l'une quelconque des revendications de 1 à 8, caractérisé en ce que sur chaque buse d'aspiration (14, 15) est prévue une buse (51) pour l'admission d'un liquide vers la surface filtrante.

10. Appareil de filtration suivant l'une quelconque des revendications de 2 à 8, caractérisé en ce que les canalisations d'aspirations (46, 47) d'une paire de buses d'aspiration (14, 15) peuvent être obturées en alternance, de telle sorte que le courant d'aspiration ne peut circuler que dans une buse d'aspiration (14, 15) à la fois.
